(19) Europäisches Patentamt
European Patent Office
Office européen des brevets

(11) Publication number: **0 304 149 B1**

# (12) EUROPEAN PATENT SPECIFICATION

(45) Date of publication of patent specification: **22.09.93**

(51) Int. Cl.$^5$: **C09F 9/00**, C09D 5/00

(21) Application number: **88305886.9**

(22) Date of filing: **29.06.88**

## (54) High-solids coating compositions.

(30) Priority: **20.08.87 US 87609**

(43) Date of publication of application:
**22.02.89 Bulletin 89/08**

(45) Publication of the grant of the patent:
**22.09.93 Bulletin 93/38**

(84) Designated Contracting States:
**AT BE DE ES FR GB IT NL**

(56) References cited:
**EP-A- 0 188 115**
**DE-A- 2 025 410**
**US-A- 3 914 336**
**US-A- 4 100 133**

(73) Proprietor: **MOONEY CHEMICALS, INC.**
**2301 Scranton Road**
**Cleveland Ohio 44113(US)**

(72) Inventor: **Cells, Paul L.**
**4359 Skylane**
**Cleveland, OH 44109(US)**

(74) Representative: **Lambert, Hugh Richmond et al**
**D. YOUNG & CO., 21 New Fetter Lane**
**London EC4A 1DA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 304 149 B1**

Rank Xerox (UK) Business Services
(3.10/3.6/3.3.1)

## Description

This invention relates to high-solids coating compositions and more particularly to high-solids coating compositions exhibiting improved drying and film characteristics.

The use of various polyvalent metal salts, and in particular, transition metal salt compositions as driers or siccatives for paints, varnishes and inks is well known. Such metal salts also have been described as "drier catalysts". Such drier catalysts promote the oxidative polymerization of the polyunsaturated oils in the coating compositions after application in order to effect drying. Lead, cobalt, manganese, Zirconium, rare earth and calcium soaps are among those commonly employed for this purpose. Commercial driers ordinarily are dissolved in any of various solvents suitable for the purpose, most usually in petroleum distillates such as those commonly termed petroleum spirits, mineral spirits, etc.

For many years, curable coating compositions useful as paints, varnishes, etc., were dissolved in volatile hydrocarbon solvents to facilitate the deposition of thin films on the substrates to be coated and to enable the solvent to evaporate into the atmosphere within a reasonable period of time leaving a dry non-tacky coating. The use of such volatile hydrocarbon solvents as diluents, therefore, results in air pollution problems.

U.S. Patent 1,880,759 describes the use of various metal salts, including vanadium, of ketobenzoic acid as driers in oils, paints and varnishes. Other early patents describing the use of metal salts of various carboxylic acids as driers include U.S. Patents 1,900,693 (salts of fatty hydroxylated oils); 1,927,867 (alkyl-substituted benzoic acid salts); and 1,962,478 (salts of monobasic ketonic acids).

Drier compounds which are complexes of metal-phenol-nitrogen compounds are described as being useful in polyester resins in U.S. Patent 2,630,419. Vanadium is included as one of the metals. U.S. Patent 3,362,972 describes the preparation of certain molybdenum and vanadium salts of carboxylic acids, and the heavy metal salts are described as being useful as driers.

U.S. Patent 3,476,723 describes the process for peroxidic curing of acrylate-type monomer-polymer syrupy solutions using a curing system which comprises a free-radical-generating peroxide, a vanadium accelerator and an aliphatic aldehyde. The disclosed vanadium accelerators may be inorganic, organic or complex vanadium compound in combination with a liquid aliphatic mono- or diester of phosphoric acid or phosphorus acid or a liquid aliphatic or aromatic sulfonic acid. The use of a combination of vanadium and zirconium salts as accelerators for curing unsaturated polyester resins in the presence of peroxide catalysts is described in U.S. Patent 3,639,504.

U.S. Patent 4,100,133 describes air-dried curable compositions which comprise dicyclopentenyl acrylate or methacrylate and non-volatile reactive monomer, polyvalent metal-containing complexes such as cobalt naphthenate and a volatile oxime stabilizer. Such compositions are characterized by the fact that they can have exceptionally high-solids content and rapid cure by air-drying. High-solids alkyd resin coatings are described in U.S. Patent 4,624,869. The alkyd coatings are modified to include an unsaturated polyester or unsaturated polyester urethane cure modifier. The process also is reported to be useful on acrylic and polyester resins.

U.S. Patent 4,633,001, corresponding to EP-A-0188115, describes a method of preparing transition metal salt compositions of organic carboxylic acids having improved properties. Vanadium is one of the transition metals used in preparing the salt compositions described in this patent. The patent also describes a variety of uses for the transition metal salts including the use in paint formulations and in various resin-based coating compositions including polyesters, phenolic resins and alkyl alkyd resins but without any specific mention of high-solids coating compositions. Vanadium compounds are also disclosed as accelerators for unsaturated polyester resins in GB-A-1319418.

More recently, the coatings industry has directed its attention to the problem of volatile organic emissions from organic coating compositions. These efforts have been encouraged by various governmental and state agencies concerned with the air pollution caused by the use of volatile hydrocarbon solvents. Such efforts by the coatings industry have resulted in the development of a number of high-solids resin coating formulations which contains significantly reduced amounts of solvents, and, in some instances, little or no solvent. In some, instances, the volatile hydrocarbon solvents have been replaced by reactive diluents such as monoethylenically unsaturated monomers containing a vinyl group. Such reactive diluents may be, for example, vinyl compounds such as vinyl toluene, vinyl chloride, vinyl esters of alkanoic acids, or acrylic monomers such as acrylic acid, methacrylic acid, or esters of acrylic or methacrylic acids. Although the reactive diluent developments have provided reduced solvent emission and high-solids coatings, such systems often exhibit a slow dry and film cure on application. Many of the drier catalysts which have been useful as driers for hydrocarbon-diluted organic coating formulations are observed to be inadequate when used in high-solids coating formulations.

In accordance with the present invention high-solids coating compositions containing at least 80% by weight of non-volatile material are provided having improved drying characteristics in particular the ability to provide thick (circa 10 mils, 0.254mm) wrinkle-free coatings with acceptably short drying times.

More particularly the present invention provides high-solids coating compositions containing at least 80% by weight and possibly up to 100% by weight of non-volatile material, i.e. with at the most only 20% volatile materials, those coating compositions comprising the combination of a) an alkyd resin, an acrylic resin, a melamine resin, an epoxy resin, a phenolic resin or polyvinyl alcohol as the resin component, and b) a hydrocarbon-soluble coordination complex of a vanadium carboxylate salt and a chelating agent, as a drying agent.

In the resins and coatings industries, the term "solids" is often equated with non-volatile material (NVM) and is used synonymously therewith. For example, a resin formulation containing 100% NVM also is referred to as 100% solids.

A wide variety of air-curable organic resins have been and are being utilized by the coatings industry and may be used in the present invention. Thus the air-curable resin component of the high-solids coating compositions will be selected from any of the following: alkyd resins, acrylic resins, melamine resins, epoxy resins, phenolic resins and polyvinyl alcohol resins. Air-dried curable alkyds, and acrylic polymers are particularly useful in the present invention.

Alkyd resins are the polymerisation products of polyhydric alcohols and polybasic acids modified with monobasic fatty acids. Non-oil or oil-free alkyds, best described as saturated or hydroxylated reactive polyesters, are forme<1 by the reaction of polybasic acids with excess polyhydric alcohols.

Alkyd resins generally are classified by alkyd ratio or polyhydric alcohol:phthalate ratio, oil length or percent oil for alkyds containing glycerol as the only polyol, and percent phthalic anhydride. Alkyds are roughly classified into four main types: short (30-42% fatty acid content, 38-46% phthalic anhydride content); medium 43-54% fatty acid content, 30-37% phthalic anhydride content); long (55-68% fatty acid content, 20-30% phthalic anhydride content); and very long (>68% fatty acid content, <20% phthalic anhydride content). The percentage of fatty acid content influences the properties of alkyd resins.

Among the polyhydric alcohols which can be used to prepare alkyd resins, glycerol is the most widely used followed by pentaerythritol. Polyols such as sorbitol and diethylene glycol also have been used.

Phthalic acid and isophthalic acid have been the most widely used polybasic acids in the preparation of alkyd resins.

In one embodiment, the alkyd resin formulations used in the present invention will also contain an unsaturated monomer capable of reacting with the alkyd resin to form cross-linkages. The unsaturated monomers include vinyl or acrylate monomers, and these are incorporated into the formulations as reactive diluents. Suitable unsaturated monomers include styrene, methyl styrene, dimethyl styrene, vinyl toluene, divinyl benzene, dichloro styrene, methyl acrylate, ethyl acrylate, methyl methacrylate, ethyl methacrylate, diallylphthalate, vinyl acetate, acrylonitrile, acrylamide, vinyl chloride, vinylidine chloride, vinyl formate, vinyl acetate, vinyl butyrate, vinyl stearate, etc. Mixtures of such monomers such as methyl methacrylate and butyl acrylate, styrene and ethyl or butyl acrylate, or acrylonitrile and ethyl acrylate also may be utilized.

Alternatively, the preferred high-solids coating compositions of the present invention contain at least one air-curable acrylic resin. These may be derived from acrylic acid, methacrylic acid, or esters of acrylic acid or methacrylic acid by techniques well known to those skilled in the art. In one embodiment, curable resin formulations may comprise homopolymers or copolymers of methyl methacrylate in monomeric methyl methacrylate diluent.

The organic resins used in the preparation of the high-solids coating compositions of the present invention should be high in non-volatile materials and preferably will comprise at least 80 up to 100% of non-volatile materials. By the term "non-volatile" as used in this application, it is intended that the resin and the reactive monomer diluent, when present, must have a vapor pressure under the conditions of cure such that no more than about 5 weight percent of the resin/reactive monomer is lost by evaporation during curing of the film coatings formed from the high-solids coating compositions of the invention.

It has been observed that in such high-solids coating compositions often cannot be dried and cured to acceptable coatings when many of the known resin driers are utilised. However, when driers are used which comprise the combination of a vanadium carboxylate and a chelating agent as defined below improved drying characteristics are obtained and which enable the formation of thick (i.e. 0.254mm or more) wrinkle free coatings.

The drying agents used in the coating compositions of the present invention to provide that result are complexes of a vanadium salt of one or more aliphatic or alicyclic mono-carboxylic acid containing from 6 to 30 carbon atoms or down to 2 if a mixture is used, and a chelating agent. The vanadium carboxylate salts used to form the complex can be acid, neutral or basic salts, the acid salts containing insufficient

metal cation to neutralise the carboxylic acid.

The aliphatic or alicyclic mono-carboxylic acids from which the vanadium salts can be prepared can be either natural or synthetic or mixtures thereof. Examples of natural acids, although usually refined, include straight and branched chain mono-carboxylic acids and mixtures such as tall oil acids and cyclic mono-carboxylic acids, such as naphthonic acid. Aliphatic mono-carboxylic acids containing 6 or more carbon atoms or mixtures thereof are particularly useful.

In one embodiment, the metal salts (sometimes referred to as soaps) can be prepared by fusion or precipitation methods. The soaps normally are prepared in an inert liquid medium such as a hydrocarbon oil or solvent. The organic mono-carboxylic acids used will preferably contain at least 6 carbon atoms, but when more than one carboxylic acid is employed, carboxylic acids is employed, carboxylic acids containing as little as 2 carbon atoms may be employed as one of the acids of the mixtures. Examples of useful organic carboxylic acids include acetic acid, propionic acid, butyric acid, isopentanoic acid, hexanoic acid, 2-ethyl butyric acid, nonanoic acid, decanoic acid, 2-ethyl hexanoic acid, isooctanoic acid, isononanoic acid, neodecanoic acid, lauric acid, palmitic acid, stearic acid, oleic acid, linoleic acid, naphthenic acid, and commercially available mixtures of two or more carboxylic acids such as naphthenic acids, tall oil acids, rosin acids, etc.

Basic metal salts or soaps of carboxylic acids can be those prepared by methods well known in the art. Examples of neutral and basic salts and of metal salt complexes as well as a preparation can be found, for example, in U.S. Patents 3,723,152 and 3,941,806 which disclosures are hereby incorporated as a reference.

In a preferred embodiment, the vanadium carboxylate salts utilised in the coating compositions of the present invention obtained by the process described in EP-A-0188115, that is to say by

(A) reacting a vanadium compound wherein the vanadium is at one of its higher positive oxidation states with a reducing agent to form an intermediate containing the vanadium at a lower positive oxidation state; and

(B) reacting said intermediate with the desired carboxylic acid or carboxylic acid mixture to form the required vanadium salt.

As noted, the above process utilizes a vanadium compound, preferably an oxide, wherein the vanadium is at one of its higher positive oxidation states. In the first step of the process, the vanadium is treated with at least one reducing agent to form an intermediate containing the vanadium in a lower positive oxidation state. Any reducing agent which is capable of reducing a vanadium in its higher positive oxidation state to a lower positive oxidation state may be utilised in the process of the present invention. Examples of such reducing agents include organic reducing agents such as oxalic acid, citric acid, and ascorbic acid, and inorganic reducing agents such as sodium bisulfite and various hydrazine sources. Preferably a hydrazine source is used, i.e. a compound or mixture of compounds which is capable of producing hydrazine under the conditions of the reaction in sufficient quantity to reduce the vanadium oxide from a higher to a lower positive oxidation state. Many such hydrazine sources are known to those of skill in the art. See, for example, the book entitled "Hydrazine" by Charles C. Clark, published by the Mathieson Chemical Corporation of Baltimore, Maryland (1953), particularly pages 31 through 71 and 120 through 124; and the book entitled "The Chemistry of Hydrazine" by L.F. Audrieth and B.A. Ogg, published by John Wiley and Son, New York (1951), especially pages 209 through 223. The hydrazine sources are the preferred reducing agents.

Among the more common, and therefore preferred hydrazine sources, are hydrazine itself, hydrazine hydrate and solutions of hydrazine and water, as well as hydrazinium salts of, for example, sulfuric and hydrochloric acid, semicarbazides and thiosemicarbazides and their analogous salts; hydrazine dicarboxylates of lower alkanols (e.g., ROOCNHNHCOOR) and their dimers as well as the amino guanidines and their -NHNH- sulfuric and hydrochloric acid salts and benzene sulfonyl hydrazides and their bisoxy analogs. Mixtures of hydrazine sources can also be used. This list is not intended to be exhaustive or in any way limit the invention and many useful hydrazine sources similar to those listed will occur to those skilled in the art.

For reasons of economy and ease of handling, hydrazine and particularly its solutions with water and other solvent/diluents are preferred. A typical hydrazine source is a mixture of water and hydrazine containing about 64% hydrazine, although similar mixtures containing more or less hydrazine (about 20-80%; more often, about 30-70% hydrazine) can be used.

Techniques of using such hydrazine sources in chemical reactions are well known to those of skill in the art, as for example is shown by the books cited above and the article entitled "Hydrazine" in Kirk-Othmer Encyclopedia of Chemical Technology, Second Edition, Vol. 11, pages 164-196, Interscience Publishers, New York, New York (1966). These are hereby incorporated by reference for their relevant disclosures in

regard to techniques for using hydrazine sources.

The reaction of the intermediate containing the vanadium in a lower positive oxidation state with at least one organic carboxylic acid (step (B)) to form the metal salt of the said carboxylic acid may be, and preferably is conducted, in the presence of a promoter which is generally at least one nitrogen-containing compound. The nitrogen-containing compound generally may be ammonia, ammonium compounds such as ammonium hydroxides, and ammonium halides, or organic nitrogen compounds or mixtures thereof. Ammonia generally is added as ammonium hydroxide or an ammonium halide such as ammonium chloride. Although only a small amount of ammonia generally is used, the reaction may be facilitated by the incremental addition of ammonia during the heating step. Similarly only a small amount of organic amine is needed to be effective to initiate and promote the reaction, and the reaction is promoted further by the addition of ammonia during the heating step.

The organic amines useful as promoters in the invention can be aliphatic or aromatic amines and polyamines. The aliphatic amines may be alkyl amines such as n-hexylamine and n-octyl amine, or substituted aliphatic amines such as alkanolamines. Polyamines and poly-alkanolamines also are useful as well as heterocyclic amines including pyridine, picoline, etc.

Aliphatic amines containing from about 10 to 30 carbon atoms, and mixtures of aliphatic amines are useful. For example, two commercially available aliphatic amine mixtures are Primene 81R which is a mixture of $C_{12}$ and $C_{14}$ aliphatic amines, and Primene JM-T which is a mixture of $C_{18}$ and $C_{20}$ aliphatic amines. Both of these materials are available under these trade designations from Rohm and Haas Co. Among the aromatic amines found to be useful is ortho-phenetidene and N,N'-substituted p-phenylene diamines such as those having the formula

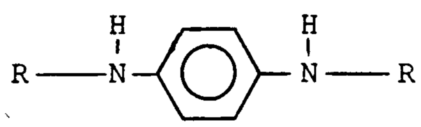

wherein each R is independently an alkyl group containing up to 10 carbon atoms. One example of such a compound is Santoflex 77 available from Monsanto Co. wherein each R group is a 1,4-dimethylpentyl group.

The reaction mixture generally contains a non-reactive diluent which preferably is mineral spirits, mineral oil, synthetic oil or mixtures thereof. The mineral spirits generally utilized have a boiling range of about 149° to about 205°C.

The reaction mixture also may contain other materials for various ancillary purposes, for example, to serve as dispersing agents, viscosity modifiers, etc. Examples of viscosity modifiers which are useful in the process of the invention include materials such as glycols, alcohol ethers, or glycol ethers, amines, phosphate esters, etc. Some of the ancillary constituents may react and combine with the metal, but the net effect is not deleterious to the process or the ultimate product. For example, alkoxy alkanols of higher molecular weight and boiling ranges may be left in the final product either as a combined organic moiety or merely as a mixture.

Glycols or polyols and glycol ethers often are included as ancillary materials, particularly as viscosity modifiers, and these materials generally fall within the formula

$[R_n(OR')_yOH]_z$ (I)

wherein

R is hydrogen or an alkyl group having from 1 to about 10 carbon atoms,

n is 0 or 1,

R' is an alkylene group having 2, 3 or 4 carbon atoms which may be substituted with hydroxyl groups,

y is an integer from 0 to 4, and

z is a value of 2 when n is 0, and a value of 1 when n is 1.

The amount of the glycols, polyols or glycol ethers incorporated into the reaction mixture is not critical and can be varied depending on properties desired for the reaction mixture.

Examples of glycols or polyols and glycol ethers represented by the above Formula I include Cellosolve (2-ethoxyethanol); methyl Cellosolve (2-methoxyethanol); Carbitol (diethylene glycol monoethylether); butyl Cellosolve (2-butoxyethanol); diethylene glycol, triethylene glycol, dipropylene glycol, tripropylene glycol, polypropylene glycol, tetraethylene glycol, ethylene glycol and Sorbitol. Mixtures of glycols and glycol

ethers can also be used.

Examples of phosphate esters which can be utilized as viscosity modifiers, etc. in the reaction mixture include alkyl and aryl phosphates and acid phosphates. Examples of such esters include tributyl phosphate, triamyl phosphate, triphenyl phosphate, tricresyl phosphate, mono amyl acid phosphate, mono butyl acid phosphate, diamyl acid phosphate, dibutyl acid phosphate, and mixtures of one or more of said esters.

The amount of reducing agent utilised in step (A) is that amount which is effective in reducing the vanadium of the vanadium oxide compound to a lower positive oxidation state. Generally, the amount of reducing agent should be sufficient to reduce substantially all of the vanadium from its higher positive oxidation state to a lower positive oxidation state. Accordingly, the mole ratio of vanadium oxide compound to reducing agent in step (A) will be from about 1:0.1 to about 1:5. The reduction of the vanadium from its higher oxidation state to a lower oxidation state occurs at room temperature although the rate of reduction appears to be increased with increasing temperature. Accordingly, the reduction step (A) generally will be conducted at a temperature of from about room temperature up to about 85°C. Higher temperatures may be utilised, but appear to offer no advantage.

The intermediate which is obtained in step (A) and which contains the vanadium in a lower positive oxidation state is reacted with at least one organic carboxylic acid to form the desired vanadium salt. The amount of organic carboxylic acid utilised in step (B) may vary over a wide range although it is generally desired that the equivalent ration of vanadium to organic carboxylic acid be at least about 0.5:1 and more generally will he at least about 1:1. The reaction between the vanadium intermediate and the organic carboxylic acid can occur at room temperature although the rate of the reaction appears to be increased with increasing temperature. Accordingly, the reaction of step (B) generally is conducted at a temperature of from about room temperature up to about 200°C.

Elevated pressures can be utilized in steps (A) and (B) of the process for preparing vanadium salts, but these steps generally are conducted at about atmospheric pressure.

Although the above process for preparing the vanadium salts is described herein as a sequence of steps (A) and (B), it is not necessary that the reactants be added to the reaction mixture sequentially. As illustrated in some of the examples below, a mixture containing the vanadium compound, the reducing agent and the organic carboxylic acid can be prepared and heated to an elevated temperature. The initial reaction is the desired reduction described as step (A) followed by reaction of the vanadium in its lower valence state with the organic carboxylic acid present in the mixture.

Although vanadium salts of organic carboxylic acids having acceptable properties are obtained utilising the above-described three-step process, vanadium salts having improved stability are obtained when the above process is modified to include the further step of

(C) mixing said vanadium salt formed in step (B) with (i) at least one antioxidant or (ii) at least one additional metal salt of an organic carboxylic acid wherein the additional metal is more electronegative than the vanadium.

Generally the additional metal of the metal salt mixed with the vanadium salt in step (C) is an alkali or alkaline earth metal salt or mixtures thereof. More generally, the metal will be an alkali metal, preferably, potassium.

The metal salt of the more electronegative metal will be a salt of at least one organic carboxylic acid which may be aliphatic or alicyclic monocarboxylic acids containing from about 2 to 30 carbon atoms. Accordingly, the monocarboxylic acids present in the more electronegative metal salt may be the same or different from the monocarboxylic acids utilized in the preparation of the vanadium salts of the invention.

Methods for preparing the more electronegative metal salts are well known to those skilled in the art, and the salts may be prepared as normal or basic salts by varying the amount of metal reacted with the organic carboxylic acid and by other techniques used in the art to increase the amount of metal reacted with carboxylic acids which results in overbased products. In this regard, reference is made to U.S. Patents 2,251,798; 2,955,949; 3,723,152; and 3,941,606, the disclosures of which are hereby incorporated by reference.

Normal and basic potassium salts useful in step (C) in the process of the present invention are available commercially from a variety of sources such as the glycol solutions of potassium salts available from Mooney Chemicals, Inc., Cleveland, Ohio. Solutions of potassium, calcium, and zinc salts of 2-ethylhexanoic acid are available under the designation "Hex-Cem"; calcium and zinc salts of commercially available naphthenic acids are available under the designation "Nap-All®"; calcium and zinc salts of synthetic domestic acids are available under the designation "Cem-All®"; etc. The amount of metal present in the above-identified metal salt solutions ranges from about 5 to about 16% or more by weight.

The amount of the more electronegative potassium salt incorporated into the above process (and the product obtained thereby) may vary over a wide range, and amounts of up to about 98% by weight of the

more electronegative metal, based on the weight of the vanadium solution, can be utilized.

The salt of the more electronegative metal can be prepared in situ. In one embodiment, excess acid is added to the reaction mixture when the vanadium salt is formed and this excess is available to react with the more electronegative metal compound, e.g., potassium oxide, calcium hydroxide, etc. In another embodiment the vanadium salt is formed, and at least one carboxylic acid and a compound of a more electronegative metal such as potassium oxide are added to the reaction mixture to form the potassium salt in situ.

The vanadium salts prepared in accordance with the above methods also can be stabilized further by incorporating antioxidants into the reaction mixture. Generally, the antioxidants will be added to the reaction mixture sometime before filtration. Examples of antioxidants include butylated hydroxy toluene available commercially under the trade designation Ionol from Shell Chemical Co., butylated hydroxy anisole, sodium borohydride, Santoflex 77, (Monsanto), etc.

The following examples illustrate the above processes for preparing some vanadium salt compositions useful in the coatings of this invention. Unless otherwise indicated in the following examples and elsewhere in the specification and appended claims, all parts and percentages are by weight, and all temperatures are in degrees centigrade.

EXAMPLE 1

A mixture of 410 parts of mineral spirits, 115 parts of hydrazine hydrate, and 100 parts of ammonium metavanadate is prepared, and 100 parts of distilled water are added to improve the dispersion. The mixture is heated to a temperature of about 70°C over a period of about 40 minutes whereupon 44 parts of 2-ethylhexanoic acid are added over a period of about 4 minutes. The mixture is heated to a temperature of about 95°C, and 40 parts of propionic acid are added. After heating the mixture to a temperature of 90-100°C for one hour, the mixture is thereafter cooled and filtered through a filter aid. The filtrate is the desired product which is green in color.

EXAMPLE 2

A mixture of 57 parts of butyl Cellosolve, 360 parts of mineral spirits, 80 parts of ammonium metavanadate, 420 parts of 2-ethylhexanoic acid, 40 parts of propionic acid and 40 parts of water is prepared and heated to 30°C whereupon 5 parts of oxalic acid are added. After heating this mixture to about 85°C, 115 parts of hydrazine hydrate are added, and after 25 minutes of stirring, an additional 100 parts of mineral spirits are added. The mixture is heated to about 140°C for about one hour, cooled and filtered. The filtrate is the desired green vanadium salt.

EXAMPLE 3

A mixture of 57 parts of butyl Cellosolve, 410 parts of mineral spirits and 100 parts of ammonium metavanadate is prepared at about 20°C, and 115 parts of hydrazine hydrate are added as the temperature reaches 25°C. The mixture is sparged with nitrogen and heated to about 80°C whereupon 52 parts of valeric acid and 368 parts of 2-ethylhexanoic acid are added. This mixture then is heated to about 140°C over a period of about 1.5 hours and filtered through a filter aid. The filtrate is the desired product which is green in color.

EXAMPLE 4

A mixture of 57 parts of butyl Cellosolve, 390 parts mineral spirits and 100 parts of ammonium metavanadate is prepared and heated to about 70°C. Hydrazine hydrate (120 parts) is added as the temperature of the reaction mixture is increased to 80°C. Valeric acid (52 parts) and 518 parts of 2-ethylhexanoic acid are added with stirring. The mixture is heated to 150°C and an additional 20 parts of valeric acid are added. After stirring an additional 30 minutes, the mixture is filtered through a filter aid, and the filtrate is the desired product which is green in color.

EXAMPLE 5

A mixture of 100 parts of tributyl phosphate, 200 parts of mineral spirits, 90 parts of ammonium metavanadate, 600 parts of 2-ethylhexanoic acid, 40 parts of propionic acid and 40 parts of pelargonic acid

is prepared, and 100 parts of hydrazine hydrate are added. This mixture is sparged with nitrogen and heated to 80 °C over a period of about one hour and filtered. The filtrate is the desired product which is green in color.

EXAMPLE 6

A mixture of 100 parts of tributyl phosphate, 200 parts of mineral spirits, 93.5 parts of ammonium metavanadate, 600 parts of 2-ethylhexanoic acid, 40 parts of propionic acid and 40 parts of pelargonic acid is prepared, and 100 parts of hydrazine hydrate are added with stirring. The reaction mixture reaches a temperature of about 40 °C over a period of 2.5 hours. Heat is applied to raise the reaction temperature to 98 °C, and an additional 30 parts of hydrazine hydrate are added. When the reaction temperature reaches 155 °C, the heat is removed and the reaction mixture is cooled and filtered. The filtrate is the desired product which is green in color.

EXAMPLE 7

A mixture of 200 parts of ammonium metavanadate, 600 parts of mineral spirits and 200 parts of hydrazine is prepared and heated to 55 °C whereupon 900 parts of 2-ethylhexanoic acid are added. The reaction temperature is raised to 105 °C over a period of about 2.5 hours. After cooling overnight, the mixture is reheated to a temperature of about 85 °C and sparged with carbon dioxide as the mixture is heated to about 150 °C. Neodecanoic acid (300 parts) is added and the mixture is maintained at this temperature for an additional 15 minutes. The mixture is filtered, and the filtrate is the desired product which is green in color.

EXAMPLE 8

A mixture of 410 parts of mineral spirits, 115 parts of hydrazine hydrate, and 100 parts of ammonium metavanadate is prepared, and 100 parts of distilled water are added to improve the dispersion. The mixture is heated to a temperature of about 70 °C over a period of about 40 minutes whereupon 44 parts of 2-ethylhexanoic acid are added over a period of about 4 minutes. The mixture is heated to a temperature of about 95 °C, and 40 parts of propionic acid are added. After heating the mixture to a temperature of 150 °C, 131 parts of a potassium salt of 2-ethylhexanoic acid (15% potassium) are added with stirring and the mixture is thereafter cooled and filtered through a filter aid. The filtrate is the desired product.

EXAMPLE 9

A mixture of 57 parts of butyl Cellosolve, 360 parts of mineral spirits, 80 parts of ammonium metavanadate, 420 parts of 2-ethylhexanoic acid, 40 parts of propionic acid and 40 parts of water is prepared and heated to 30 °C whereupon 5 parts of oxalic acid are added. After heating this mixture to about 85 °C, 115 parts of hydrazine hydrate are added, and after 25 minutes of stirring, an additional 100 parts of mineral spirits are added. The mixture is heated to about 140 °C for about one hour and 136 parts of a solution of the potassium salt of 2-ethylhexanoic acid in mineral spirits (15% potassium). The mixture is filtered, and the filtrate is the desired vanadium salt.

EXAMPLE 10

A mixture of 450 parts of mineral spirits, 158 parts of hydrazine hydrate and 137 parts of ammonium metavanadate is prepared and heated to a temperature of about 105 °C whereupon 504 parts of 2-ethylhexanoic acid and 71 parts of valeric acid are added. The mixture is heated to a temperature of about 180 °C, and 175 parts of a solution of the potassium salt of 2-ethylhexanoic acid (16% potassium) are added followed by 80 parts of butyl carbitol. The mixture is heated at about 150 °C for an additional 2 hours and cooled. An additional 35 parts of 2-ethylhexanoic acid are added to the mixture which is then heated to about 150 °C. The mixture is then cooled and diluted with an additional 210 parts of mineral spirits and filtered. The filtrate is a solution of the desired vanadium salt containing 38.6% non-volatile material and 4% vanadium.

EXAMPLE 11

A mixture of 57 parts of butyl Cellosolve, 400 parts of mineral spirits, 80 parts of ammonium metavanadate, 400 parts of 2-ethylhexanoic acid, 40 parts of propionic acid, 136 parts of a solution of a potassium salt of 2-ethylhexanoic acid (15% potassium) and 100 parts of water is prepared. The mixture is heated to a temperature of about 65°C whereupon 31 parts of hydrazine hydrate are added followed by 1 part of oxalic acid. The reaction temperature is raised to about 85°C and 50 parts of hydrazine hydrate are added followed by an additional 10 parts of ammonium metavanadate. The temperature of the reaction mixture is increased to about 98°C while sparging with nitrogen. The reaction temperature is raised to about 165°C over a period of about two hours, and the reaction mixture is filtered. The filtrate is the desired product.

EXAMPLE 12

A mixture of 57 parts of butyl Cellosolve, 410 parts of mineral spirits and 100 parts of ammonium metavanadate is prepared at about 20°C, and 115 parts of hydrazine hydrate are added as the temperature reaches 25°C. The mixture is sparged with nitrogen and heated to about 80°C whereupon 52 parts of valeric acid and 368 parts of 2-ethylhexanoic acid are added. This mixture then is heated to about 140°C over a period of about 1.5 hours whereupon 126.5 parts of a solution of the potassium salt of 2-ethylhexanoic acid (15% potassium) are added to the reaction mixture with stirring. The mixture then is filtered through a filter aid. The filtrate is the desired product.

EXAMPLE 13

A mixture of 57 parts of butyl Cellosolve, 390 parts mineral spirits, 100 parts of ammonium metavanadate and 33 parts of potassium hydroxide is prepared and heated to about 70°C. Hydrazine hydrate (120 parts) is added as the temperature of the reaction mixture is increased to 80°C. Valeric acid (52 parts) and 518 parts of 2-ethylhexanoic acid are added with stirring. The mixture is heated to 150°C and an additional 20 parts of valeric acid are added. After stirring an additional 30 minutes, the mixture is filtered through a filter aid, and the filtrate is the desired product.

EXAMPLE 14

A mixture of 57 parts of butyl Cellosolve, 410 parts of mineral spirits, 100 parts of ammonium metavanadate and 33 parts of potassium hydroxide is prepared and heated to 45°C whereupon 115 parts of hydrazine hydrate are added. The mixture reaches a temperature of about 65°C, and 518 parts of 2-ethylhexanoic acid and 40 parts of propionic acid are added. This mixture is heated to about 150°C over a period of 1.5 hours, and the reaction mixture then is filtered. The filtrate is the desired product.

EXAMPLE 15

A mixture of 100 parts of tributyl phosphate, 200 parts of mineral spirits, 90 parts of ammonium metavanadate, 600 parts of 2-ethylhexanoic acid, 40 parts of propionic acid and 40 parts of pelargonic acid is prepared, and 100 parts of hydrazine hydrate are added. This mixture is sparged with nitrogen and heated to 80°C over a period of about one hour whereupon 35 parts of potassium hydroxide dissolved in 100 parts of water are added. The mixture then is heated to 160°C over a period of about 2 hours and filtered. The filtrate is the desired product.

EXAMPLE 16

A mixture of 100 parts of tributyl phosphate, 200 parts of mineral spirits, 93.5 parts of ammonium metavanadate, 600 parts of 2-ethylhexanoic acid, 40 parts of propionic acid and 40 parts of pelargonic acid is prepared, and 100 parts of hydrazine hydrate are added with stirring. The reaction mixture reaches a temperature of about 40°C over a period of 2.5 hours. Heat is applied to raise the reaction temperature to 98°C, and an additional 30 parts of hydrazine hydrate are added. When the reaction temperature reaches 155°C, the heat is removed and the reaction mixture is cooled to about 98°C. Calcium hydroxide (25 grams) is added with stirring and the mixture is reheated to a temperature of about 155°C. The mixture is cooled and filtered. The filtrate is the desired product.

EXAMPLE 17

A mixture of 410 parts of mineral spirits and 115 parts of hydrazine hydrate is prepared, and 100 parts of ammonium metavanadate is added at a temperature of about 60°C. After stirring for about one hour and raising the temperature to about 70°C, 54 parts of valeric acid and 368 parts of 2-ethylhexanoic acid are added sequentially, and the mixture is heated with stirring to a temperature of about 130°C over a period of about 9 hours. To this reaction mixture there is added 110 parts of a solution of the potassium salt of 2-ethylhexanoic acid (16% potassium) and 58 parts of butyl carbitol. The mixture is heated to about 150°C over a period of about 2 hours and maintained at this temperature for an additional hour whereupon 200 parts of mineral spirits were added. The reaction mixture is filtered, and the filtrate is the desired product containing 3.94% vanadium.

EXAMPLE 18

A mixture of 100 parts of ammonium metavanadate, 200 parts of mineral spirits, 20 parts of ammonium chloride and 50 parts of water is prepared and heated to 30°C whereupon 100 parts of hydrazine hydrate are added with stirring. This mixture is heated to about 75°C, and 450 parts of 2-ethylhexanoic acid are added. After heating this mixture to about 105°C, 75 parts of a mineral spirit solution of the potassium salt of 2-ethylhexanoic acid (16% potassium) are added. The reaction mixture is maintained at a temperature of between about 105 to 150°C over a period of about 2 hours, cooled and filtered. The filtrate is the desired product.

EXAMPLE 19

A mixture of 140 parts of ammonium vanadate, 100 parts of butyl Cellosolve, 20 parts of tributyl phosphate and 700 parts of mineral spirits are prepared at room temperature, and 150 parts of hydrazine hydrate are added. To this mixture there is added 700 parts of 2-ethylhexanoic acid and 25 parts of propionic whereupon the reaction is exothermic to about 38°C. Ammonium hydroxide (50 parts) is added and the mixture is heated to a temperature of about 90°C over a period of 2.5 hours while sparging with nitrogen. An additional 100 parts of mineral spirits and 5 parts of tributyl phosphate are added and the mixture is heated to a temperature of about 150°C for an additional 2 hours. The heating mantle is removed from the reaction vessel, and 5 parts of Ionol are added as stabilizer. Ionol is butylated hydroxy toluene, an antioxidant. The reaction mixture is filtered, and the filtrate contains 4.9% vanadium.

EXAMPLE 20

A mixture of 178 parts of ammonium metavanadate, 600 parts of toluene and 21 parts of tributyl phosphate is prepared at room temperature, and 200 parts of hydrazine hydrate are added. The reaction is slightly exothermic to a temperature of 33°C. Neodecanoic acid (800 parts) is added as the temperature reaches about 50°C, and 20 parts of propionic acid also are added. This mixture is heated to about 80°C over a period of 1.5 hours, and 25 parts of ammonium hydroxide and 5 parts of Ionol are added sequentially. The mixture is heated to about 145°C whereupon an additional 600 parts of mineral spirits are added, and a vacuum is applied about 4 minutes to remove volatile materials. The mixture is filtered at about 120°C, and the filtrate is the desired product containing 3.38% vanadium.

EXAMPLE 21

A mixture of 51 parts of ammonium metavanadate and 500 parts of mineral spirits is prepared at room temperature, and 120 parts of hydrazine hydrate is added. The reaction is exothermic to a temperature of about 55°C. Neofat 18 (1000 parts) is added followed by 50 parts of ammonium hydroxide as the reaction temperature is raised to 90°C. At this temperature, 300 parts of mineral spirits, 50 parts of propionic acid and 20 parts of ammonium hydroxide are added sequentially. The temperature is raised to 100°C, and 50 parts of propionic acid are added, and as the temperature is raised to about 150°C, a slight vacuum is applied to remove volatile materials, including the mineral spirits. Ionol (7 parts) is added and after stirring an additional 10 minutes at 150°C, the mixture is poured into a tray, and the mixture solidifies. The solid is ground to a light-green powder which is stable in air.

The amount of vanadium salt incorporated into the resins and resin formulations in accordance with the present invention in an amount which is effective to promote drying and to reduce the drying time of a

coating or film of the resin. Generally, the amount of vanadium salt incorporated into the resin formulation will be an amount sufficient to provide from about 0.0001 to about 2.0% of vanadium (as metal). More typically, the range will be from about 0.01% to about 0.2%. When more than one metal salt is used, the total amount of metal generally will fall within these ranges. For example, the vanadium salts of the present invention can be used in combination with other metal salts normally used as accelerators and driers for resins to provide additional desirable results such as improved color, etc. Such salts include potassium, calcium, cobalt, manganese, iron, bismuth, zirconium, molybdenum and aluminum salts prepared by methods known to those skilled in the art.

Specific examples of salts and soaps of other metals which can be used in combination with the vanadium salts include those described below in the following Table I.

TABLE 1

| Carboxylate Metal Salts | | | |
|---|---|---|---|
| Metal | Metal Content % | Acid | Commercial Designation* |
| Cobalt | 6 | naphthenic | 6% cobalt Nap-All® |
| Cobalt | 12 | 2-ethyl hexanoic | 12% cobalt Hex-Cem® |
| Cobalt | 12 | blend of synthetic acids | 12% cobalt Cem-All® |
| Manganese | 12 | blend of synthetic acids | 12% manganese Cem-All® |
| Zirconium | 12 | 2-ethyl hexanoic | 12% zirconium Hex-Cem |
| Calcium | 10 | blend of synthetic acids | 10% calcium Cem-All® |
| Rare Earth | 12 | 2-ethyl hexanoic | 12% rare earth Hex-Cem® |
| Bismuth | 32 | 2-ethyl hexanoic | 32% bismuth Hex-Cem® |
| Molybdenum | 15 | 2-ethyl hexanoic | 15% molybdenum Hex-Cem® |
| Potassium | 15 | 2-ethyl hexanoic | 15% potassium Hex-Cem® |

* Mooney Chemicals, Inc.

The coating compositions of the present invention also may contain other additives and components depending in part on the nature of the resin. In some instances, peroxide catalysts may be incorporated into the resin formulations to promote curing.

In accordance with the invention, the vanadium salt is essentially incorporated into the resin formulation as hydrocarbon-soluble coordination complex of the vanadium salts with a chelating agent. A variety of chelating agents may be used for this purpose, and especially the following: 1,10-phenanthroline, 2,2'-dipyridyl, tri-n-octylphosphine oxide, etc. In accordance with this invention it has been observed that such coordination complexes of vanadium salts are more effective as driers than the uncomplexed vanadium salts.

The coordination complexes may be prepared by simply mixing the vanadium salt with the chelating agent in the presence of a suitable solvent. It generally is preferred to prepare the coordination complex in advance of addition to the coating composition to insure that the complex is properly formed. This is especially true when there are competing metal ions present in the resin formulation. If there are no such competing metal ions present in the formulation, the vanadium salt and the chelating agent may be added separately to the coating composition. The amount of chelating compound incorporated into the resin compositions of the present invention may be varied and is readily determined by one skilled in the art with a minimum of experimentation. Generally, amounts of from about 0.01 to about 1% by weight based on the weight of the resin are effective. More generally, the amount of chelating agents incorporated into the coating compositions will be from about 0.05 to about 0.5% or more. The chelating agents are commercially available from a variety of sources.

Additionally, the coating compositions of the present invention may contain other desirable and well-known additives and components which are included in the formulations to improve the appearance and properties of the coatings. For example, anti-skinning or stabilizing agents often are included. One class of anti-skinning agents are the volatile organic aldoximes and ketoximes. In general, oximes of any ketone

having from 3 to about 10 carbon atoms, preferably those in which the substituents on the keto-carbon atoms are selected from alkyl groups and saturated alicyclic groups, and oximes of any aldehyde, preferably a saturated aliphatic aldehyde having from 2 to 10 carbon atoms have sufficient volatility to assure rapid autooxidation upon forming coating films from the composition of this invention. Examples of oximes are methyl ethyl ketone-oxime, methyl butyl ketone-oxime, 0,5-methyl-3-heptanone-oxime, cyclohexanoic-oxime, and butyraldehyde-oxime. Additions of such volatile oximes to the resin formulations of the invention results in longer stability and pot life of the coating compositions on storage in sealed containers. The amount of oxime stabilizer used may vary from about 0.1 to about 2% by weight based on the total weight of resin or resin-monomer mixture.

Oxime agents are commercially available from, for example, Mooney Chemicals, Inc. Skino #1® is butyaldehyde-oxime and Skino #2® is methyl ethyl ketone oxime.

High-solids resin coating formulations containing the vanadium salts of the present invention can be prepared by methods well known in the art. For example, the vanadium salt can be mixed with the vehicle (resin) prior to or after the addition of other optional components. Alternatively, the vehicle (resin) and vanadium metal salt can be mixed followed by the addition of other optional ingredients such as other metal salts, stabilizers, pigments, etc.

The following examples illustrate the coating compositions of the present invention. Beckosol 98-238 is an alkyd resin (100% NVM) available from Reichhold Chemicals, Inc. Cargill Resins 5766, 5767 and 5768 also are different high-solids alkyds available from Cargill, Inc. Due to the high viscosities of the resin, the driers and other indicated additives are mixed into the resin using a high-speed stirrer. Samples are allowed to equilibrate for about 24 hours after the drier additions before testing.

| | Amount (g) |
|---|---|
| Example E | |
| Beckosol 980238 (100% NVM) | 25 |
| Product of Example 10 | 0.31 |
| Methyl ethyl ketoxime | 0.20 |
| Dri-Rx[tm] (30% 2,2'-dipyridyl) | 0.05 |
| | |
| Example F | |
| Beckosol 98-238 (100% NVM) | 25 |
| Product of Example 10 | 0.31 |
| Dri-Rx[tm] (30% 2,2'-dipyridyl) | 0.05 |

<u>Example H</u>

| | |
|---|---|
| Cargill 5766 (90% NVM) | 100 |
| Product of Example 10 | 0.675 |
| Dri-Rx™ (30% 2,2'-dipyridyl) | 0.056 |
| Methyl ethyl ketoxime | 0.10 |

<u>Example I</u>

| | |
|---|---|
| Cargill 5766 (90% NVM) | 100 |
| Product of Example 10 | 0.675 |
| Dri-Rx™ (30% 2,2'-dipyridyl) | 0.11 |
| Methyl ethyl ketoxime | 0.10 |

<u>Example J</u>

| | |
|---|---|
| Cargill 5768 (85% NVM) | 89.8 |
| Butyl acetate | 10 |
| Methyl ethyl ketoxime | 0.1 |
| Product of Example 10 | 0.574 |
| Dri-Rx™ (30% 2,2'-dipyridyl) | 0.053 |

<u>Example K</u>

| | |
|---|---|
| Cargill 5768 (85% NVM) | 89.8 |
| Butyl acetate | 10 |
| Methyl ethyl ketoxime | 0.1 |
| Product of Example 10 | 0.574 |
| Dri-Rx™ (30% 2,2'-dipyridyl) | 0.110 |

<u>Example L</u>

| | |
|---|---|
| Cargill 5768 (85% NVM) | 89.8 |
| Butyl acetate | 10 |
| Methyl ethyl ketoxime | 0.1 |
| Product of Example 10 | 0.574 |
| Manganese Cem-All® (12%Mn) | 0.383 |
| Dri-Rx™ (30% 2,2'-dipyridyl) | 0.053 |

<u>Example M</u>

| | |
|---|---|
| Cargill 5768 (85% NVM) | 89.8 |
| Butyl acetate | 10.0 |
| Methyl ethyl ketoxime | 0.1 |
| Product of Example 10 | 0.574 |
| Cobalt Cem-All®(12%Co) | 0.383 |
| Dri-Rx™ (30% 2,2'-dipyridyl) | 0.053 |

<u>Example N</u>

| | |
|---|---|
| Cargill 5767 (90% NVM) | 88.8 |
| Mineral spirits | 11.1 |
| Methyl ethyl ketoxime | 0.1 |
| Product of Example 10 | 0.60 |
| Dri-Rx™ (30% 2,2'-dipyridyl) | 0.08 |

<u>Example O</u>

| | |
|---|---|
| Cargill 5767 (90% NVM) | 88.8 |
| Mineral spirits | 11.1 |
| Methyl ethyl ketoxime | 0.1 |
| Product of Example 10 | 1.0 |
| Dri-Rx™ (30% 2,2'-dipyridyl) | 0.12 |

<u>Example P</u>

| | |
|---|---|
| Cargill 5767 (90% NVM) | 88.8 |
| Mineral spirits | 11.1 |
| Methyl ethyl ketoxime | 0.1 |
| Product of Example 10 | 0.60 |
| Manganese Cem-All®(6%Mn) | 0.13 |
| Dri-Rx™ (30% 2,2'-dipyridyl) | 0.08 |

Example R

| | |
|---|---|
| Cargill 5766 (90% NVM) | 100 |
| Product of Example 2 | 0.675 |
| Dri-Rx[tm] (30% 2,2'-dipyridyl) | 0.056 |
| Methyl ethyl ketoxime | 0.10 |

Example S

| | |
|---|---|
| Cargill 5768 (85% NVM) | 89.8 |
| Butyl acetate | 10 |
| Methyl ethyl ketoxime | 0.1 |
| Product of Example 4 | 0.574 |
| Manganese Cem-All' (12%Mn) | 0.383 |
| Dri-Rx[tm] (30% 2,2'-dipyridyl) | 0.053 |

Example V

| | |
|---|---|
| Cargill 5767 (90% NVM) | 88.8 |
| Mineral spirits | 11.1 |
| Methyl ethyl ketoxime | 0.1 |
| Product of Example 10 | 0.10 |
| Cobalt Cem-All' (12%Co) | 0.13 |
| Dri-Rx[tm] (30% 2,2'-dipyridyl) | 0.08 |

The coating compositions of the present invention which comprise a curable resin and a vanadium salt can be utilized in the preparation of paint formulations, and thus, the coating compositions of the present invention also may incude dyes, pigments, pigment suspending agents, etc. Solvent also may be included in the coating compositions of the present invention where it is desired to reduce the level of non-volatile materials and improve the processability of the formulation. However, the amount of solvent generally is kept at a minium since the objective of the present invention is to formulate high solids coating compositions containing at least 80% non-volatile material of non-volatile material.

Examples of suitable pigments for paint formulations include inorganic as well as organic pigments which are well known in the art such as red iron oxide, zinc oxide, zinc chromat, titanium dioxide, green pigment, lithopone, carbon black, prussian blue, etc. Examples of pigment extenders which can be utilized include calcium carbonate, magnesium silicate, silica, aluminium silicate, asbestine, talc, barytes, gypsum, clay or chalk. Exemplary pigment-suspending agents include aluminum stearate and zinc stearate.

High solids paint formulations of the present invention can be prepared by methods well known in the art. For example, the pigment and vehicle of the paint can be mixed followed by the addition of the vanadium salt and other optional additives. Alternatively, the vehicle and vanadium salt can be mixed followed by the addition of pigment and other optional ingredients. In another embodiment, the pigment and a portion of the vehicle are mixed and diluted with solvent or thinner, and thereafter, the solution is subjected to grinding followed by a let-down with added solvent, the remaining resin, the vanadium compound and optional ingredients.

The coating composition can be deposited on various articles to improve the surface properties and/or appearance of the article. For example, the coating compositions of the present invention may be applied to various metal articles to improve their corrosion resistance. Pigments may be included in the coating compositions as described above to form paint formulations which can then be applied to various metal or plastic articles to improve the appearance as well as corrosion resistance. The coating compositions of the present invention when used for such purposes deposits a coating on the articles which has acceptable drying times and the coatings are substantially wrinkle-free even though the coating may be as thick as 10

mils (0.254mm) or more. The coating compositions can be applied to articles by techniques known in the art such as by spraying, brushing, dipping, etc.

The efficacy of the coating compositions of the present invention such as those illustrated in the above examples is demonstrated by casting films and observing the drying time at ambient temperature, and the condition of the coatings. Acceptable coating compositions will deposit coatings exhibiting reasonable drying times, and the coatings will be substantially wrinkle-free, particularly at heavy film builds e.g., about 10 mils thick (0.254mm).

In the following tests, the coating compositions prepared in accordance with indicated examples are allowed to equilibrate for 24 hours after drier additions before testing. Films are cast on sealed Morest Charts using a Baker Adjustable Gap Bar set at 3, 5 and 10 mils (0.0762, 0.127 and 0.254 mm). Dry times are run using Gardner Improved Circular Recorders in an environmental chamber set at 77°F (23°C) and 55% relative humidity. The dry times are summarised in the following Table II. The coatings of all of the examples are substantially wrinkle-free.

TABLE II

Coating Evaluations

| Coating Sample | Metal Present | Dry Times (hrs) 5 mil Surface | Through | 10 mil Surface | Through |
|---|---|---|---|---|---|
| I Beckosol Alkyd | | | | | |
| Ex.E | V | <3 | 11.5 | <3 | 10.3 |
| Ex.F | V | <3 | 8.1 | <3 | 11.9 |
| II Cargill Resin** | | | | | |
| Ex.H | V | -- | 3.7 | -- | 16.5 |
| Ex.I | V | -- | 4.7 | -- | 14.6 |
| Ex.J | V | -- | 8.8 | -- | 32.3 |
| Ex.K | V | -- | 2.6 | -- | 26.4 |
| Ex.L | V,Co | -- | 7.2 | -- | 26.1 |
| Ex.M | V,Mn | -- | 10.0 | -- | 34.7 |
| Ex.N | V | -- | 10.07 | -- | -- |
| Ex.O | V | -- | 5.8 | -- | -- |
| Ex.P | V,Mn | -- | 5.4 | -- | -- |
| Ex.V | V,Co | -- | 4.0 | -- | 27.1 |

** Dry times are average of two samples.

While the invention has been explained in relation to its preferred embodiments, it is to be understood that various modifications, thereof will become apparent to those skilled in the art upon reading the specification. Therefore, it is to be understood that the invention disclosed herein is intended to cover such modifications as fall within the scope of the invention herein described.

## Claims

1. An air-curable, high solids (at least 80% by weight), resin-containing coating composition comprising an air-curable resin component and a transition metal carboxylate salt complex as a drying agent therein, characterised in that the composition comprises the combination of a) an alkyd resin, an acrylic resin, a melamine resin, an epoxy resin, a phenolic resin or polyvinyl alcohol as said resin component and present in an amount of at least 80% by wt. based on the total weight of the composition b) as said

drying agent a coordination complex of a vanadium salt of one or more aliphatic or alicyclic monocarboxylic acids containing from 6 to 30 carbon atoms optionally containing carboxylic acids down to 2 carbon atoms in the case of carboxylic acid mixtures, and a chelating agent, the drying agent being present in the composition in an amount sufficient to provide therein from 0.0001 to 2.0% by weight of vanadium calculated as vanadium metal.

**2.** A coating composition according to claim 1, wherein the drying agent provides from 0.01 to 0.2% by weight of vanadium in said composition and calculated as vanadium metal.

**3.** A coating composition according to any one of claims 1 to 2, wherein the drying agent contains as said chelating agent 1,10-phenanthroline, 2,2'-dipyridyl, tri-n-octylphosphine oxide, or a mixture of two or more thereof.

**4.** A coating coposition according to any one of claim 1 to 3 wherein the vanadium carboxylate salt component of said complex is a salt prepared by

(A) reacting a vanadium compound wherein the vanadium is at one end of its higher positive oxidation states with a reducing agent to form an intermediate containing the vanadium at a lower positive oxidation state; and

(B) reacting said intermediate with the required carboxylic acid or carboxylic acid mixture to form said salt.

**5.** A coating composition according to claim 4, wherein said salt is obtained using as said reducing agent a source of hydrazine.

**6.** A coating composition according to claim 5, where said salt is obtained using as said hydrazine source hydrazine itself.

**7.** A coating composition according to 4, 5 or 6, wherein said salt is obtained by a process in which step (A) of the process is conducted in the presence of a promoter selected from ammonia, an ammonium halide, or an organic nitrogen compound.

**8.** A coating composition according to any one of claims 4 to 7, wherein said salt is obtained by a process in which the mole ratio of vanadium compound to reducing agent used to prepare the intermediate in step (A) is from 1:0.1 to 1:5.

**9.** A coating composition according to any one of claims 4 to 8, wherein said salt is obtained by a process which comprises the additional step of

(C) mixing the vanadium salt formed in step (B) with (i) at least one antioxidant, or (ii) at least one additional metal salt of an organic carboxylic acid wherein the metal of that additional salt is a metal more electronegative than vanadium, or (iii) a mixture of (i) and (ii).

**10.** A coating composition according to claim 9, wherein said salt is obtained by a process in which said additional metal salt used in step (C) is formed in situ by reaction of an additional metal compound with the said carboxylic acid reactant present in the reaction mixture.

**11.** A coating composition according to claim 9 or 10, wherein said salt is obtained by a process in which the additional metal salt used or provided in step (C) is an alkali or alkaline earth metal salt, or mixture thereof.

**12.** A coating composition according to claim 11, wherein said salt is obtained by a process in which the additional metal salt used or provided in step (C) is a potassium salt.

**13.** A method of providing a wrinkle-free, air-cured coating on a substrate, which comprises applying to the substrate a high-solids coating composition according to any one of claims 1 to 12, and allowing the composition to air-cure on the substrate.

**14.** A method according to claim 13, wherein the coating is applied at a thickness of at least 0.254 mm (10mil).

## Patentansprüche

1. Lufthärtbare harzhaltige Überzugsmasse mit hohem Feststoffgehalt (wenigstens 80 Gew.-%) mit einer lufthärtbaren Harzkomponente und einem Übergangsmetallcarboxylatsalzkomplex als Trocknungsmittel darin, **dadurch gekennzeichnet**, daß die Masse die Kombination
   a) eines Alkydharzes, eines Acrylharzes, eines Melaminharzes, eines Epoxyharzes, eines Phenolharzes oder von Polyvinylalkohol als die Harzkomponente und in einer Menge von wenigstens 80 Gew.-%, bezogen auf das Gesamtgewicht der Zusammensetzung, und
   b) eines Koordinationskomplexes eines Vanadinsalzes einer oder mehrerer aliphatischer oder alicyclischer Monocarbonsäuren mit einem Gehalt von 6 bis 30 Kohlenstoffatomen, gegebenenfalls mit einem Gehalt von Carbonsäuren mit bis herab zu 2 Kohlenstoffatomen im Falle von Carbonsäuregemischen, und eines Chelatisierungsmittels
   umfaßt, wobei das Trocknungsmittel in der Masse in einer ausreichenden Menge vorhanden ist, um darin 0,0001 bis 2,0 Gew.-% Vanadin, berechnet als Vanadinmetall, zu ergeben.

2. Überzugsmasse nach Anspruch 1, in der das Trocknungsmittel 0,01 bis 0,2 Gew.-% Vanadin in der Masse und als Vandinmetall berechnet ergibt.

3. Überzugsmasse nach einem der Ansprüche 1 und 2, in der das Trocknungsmittel als das Chelatisierungsmittel 1,10-Phenanthrolin, 2,2'-Dipyridyl, Tri-n-octylphosphinoxid oder ein Gemisch von zweien oder mehreren derselben enthält.

4. Überzugsmasse nach einem der Ansprüche 1 bis 3, in der die Vanadincarboxylatsalzkomponente des Komplexes ein Salz ist, das durch
   (A) Umsetzung einer Vandinverbindung, worin sich das Vanadin an einem Ende seiner höheren positiven Oxidationsstufen befindet, mit einem Reduktionsmittel unter Bildung eines das Vanadin in einer niedrigeren positiven Oxidationsstufe enthaltenden Zwischenproduktes und
   (B) Umsetzung dieses Zwischenproduktes mit der erforderlichen Carbonsäure oder dem erforderlichen Carbonsäuregemisch unter Bildung des Salzes hergestellt wurde.

5. Überzugsmasse nach Anspruch 4, in der das Salz unter Verwendung einer Hydrazinquelle als das Reduktionsmittel erhalten ist.

6. Überzugsmasse nach Anspruch 5, in der das Salz unter Verwendung von Hydrazin selbst als die Hydrazinquelle erhalten ist.

7. Überzugmasse nach Anspruch 4, 5 oder 6, in der das Salz mit einem Verfahren erhalten ist, in welchem die Stufe (A) des Verfahrens in Gegenwart eines Promotors durchgeführt wird, der unter Ammoniak, einem Ammoniumhalogenid oder einer organischen Stickstoffverbindung ausgewählt ist.

8. Überzugsmasse nach einem der Ansprüche 4 bis 7, in der das Salz mit einem Verfahren erhalten ist, in welchem das Molverhältnis von Vanadinverbindung zu Reduktionsmittel, die zur Herstellung des Zwischenproduktes in der Stufe (A) verwendet werden, bei 1 : 0,1 bis 1 : 5 liegt.

9. Überzugsmasse nach einem der Ansprüche 4 bis 8, in der das Salz mit einem Verfahren erhalten ist, welches die zusätzliche Stufe
   (C) eines Vermischens des in der Stufe (B) gebildeten Vanadinsalzes mit (i) wenigstens einem Antioxidationsmittel oder (ii) wenigstens einem zusätzlichen Metallsalz einer organischen Carbonsäure, worin das Metall jenes zusätzlichen Salzes ein elektronegativer Rest Metall als Vanadin ist, oder (iii) einem Gemisch von (i) und (ii) umfaßt.

10. Überzugsmasse nach Anspruch 9, in der das Salz mit einem Verfahren erhalten ist, in welchem das in der Stufe (C) verwendete zusätzliche Metallsalz in situ durch Umsetzung einer zusätzlichen Metallverbindung mit dem in dem Reaktionsgemisch vorhandenen Carbonsäure-Reaktionspartner gebildet wird.

11. Überzugsmasse nach Anspruch 9 oder 10, in der das Salz mit einem Verfahren erhalten ist, in welchem das in Stufe (C) verwendete oder vorgesehene zusätzliche Metallsalz ein Alkali- oder Erdalkalimetallsalz oder Gemisch hiervon ist.

**12.** Überzugsmasse nach Anspruch 11, in der das Metallsalz mit einem Verfahren erhalten ist, in welchem das in der Stufe (C) verwendete oder vorgesehene zusätzliche Metallsalz ein Kaliumsalz ist.

**13.** Verfahren zur Gewinnung eines faltenfreien luftgehärteten Überzuges auf einem Substrat, bei dem man auf dem Substrat eine Übetrugsmasse mit hohem Feststoffgehalt nach einem der Ansprüche 1 bis 12 aufbringt und die Masse auf dem Substrat lufthärten läßt.

**14.** Verfahren nach Anspruch 13, bei dem man den Überzug mit einer Dicke von wenigstens 0,254 mm (10 mil) aufbringt.

## Revendications

**1.** Composition de revêtement contenant une résine, durcissable à l'air et à forte teneur en solides (au moins 80 % en poids), comprenant un composant résineux durcissable à l'air et un complexe de sel carboxylate de métal de transition comme agent de séchage contenu dans celui-ci, caractérisée en ce que la composition comprend la combinaison de a) une résine alkyde, une résine acrylique, une résine de mélamine, une résine époxy, une résine phénolique ou l'alcool polyvinylique, comme composant résineux présent en une quantité d'au moins 80 % en poids sur la base du poids total de la composition, b) comme agent de séchage, un complexe de coordination d'un sel de vanadium et d'un ou plusieurs acides monocarboxyliques aliphatiques ou alicycliques contenant de 6 à 30 atomes de carbone, contenant éventuellement des acides carboxyliques dont le nombre d'atomes de carbone peut descendre jusqu'à 2 dans le cas de mélanges d'acides carboxyliques, et un chélateur, l'agent de séchage étant présent dans la composition en une quantité suffisante pour apporter dans celle-ci de 0,0001 à 2,0 % en poids de vanadium, calculé en tant que vanadium métallique.

**2.** Composition de revêtement selon la revendication 1, dans laquelle l'agent de séchage apporte de 0,01 à 0,2 % en poids de vanadium dans ladite composition, calculé en tant que vanadium métallique.

**3.** Composition de revêtement selon la revendication 1 ou 2, dans laquelle l'agent de séchage contient, comme chélateur, la 1,10-phénanthroline, le 2,2'-dipyridyle, l'oxyde de tri-n-octylphosphine, ou un mélange de deux de ces composés ou plus.

**4.** Composition de revêtement selon l'une quelconque des revendications 1 à 3, dans laquelle le composé sel carboxylate de vanadium dudit complexe est un sel préparé par :

(A) réaction d'un composé de vanadium dans lequel le vanadium est à une extrémité de ses états les plus positifs d'oxydation avec un agent réducteur pour former un composé intermédiaire contenant le vanadium dans un état moins positif d'oxydation ; et

(B) la réaction dudit composé intermédiaire avec l'acide carboxylique requis ou le mélange requis d'acides carboxyliques pour former ledit sel.

**5.** Composition de revêtement selon la revendication 4, où on obtient ledit sel en utilisant, comme agent réducteur, une source d'hydrazine.

**6.** Composition de revêtement selon la revendication 5, où on obtient ledit sel en utilisant, comme source d'hydrazine, l'hydrazine elle-même.

**7.** Composition de revêtement selon la revendication 4, 5 ou 6, où on obtient ledit sel au moyen d'un procédé dans lequel on effectue l'étape (A) du procédé en présence d'un promoteur choisi parmi l'ammoniac, un halogénure d'ammonium ou un composé azoté organique.

**8.** Composition de revêtement selon l'une quelconque des revendications 4 à 7, où on obtient ledit sel au moyen d'un procédé dans lequel le rapport molaire du composé de vanadium à l'agent réducteur utilisé pour préparer le composé intermédiaire dans l'étape (A) vaut de 1:0 à 1:5.

**9.** Composition de revêtement selon l'une quelconque des revendications 4 à 8, ou on obtient ledit sel au moyen d'un procédé qui comprend les étapes consistant à :

(C) mélanger le sel de vanadium formé dans l'étape (B) avec (i) au moins un anti-oxydant, ou (ii) au moins un sel métallique supplémentaire avec un acide carboxylique organique, où le métal de ce sel

supplémentaire est un métal plus électronégatif que le vanadium, ou (iii) un mélange de (i) et (ii).

**10.** Composition de revêtement selon la revendication 9, où on obtient ledit sel au moyen d'un procédé dans lequel ledit sel métallique supplémentaire utilisé dans l'étape (C) est formé in situ par réaction d'un composé métallique supplémentaire avec ledit partenaire de réaction acide carboxylique présent dans le mélange de réaction.

**11.** Composition de revêtement selon la revendication 9 ou 10, où on obtient ledit sel au moyen d'un procédé dans lequel le sel métallique supplémentaire utilisé ou prévu dans l'étape (C) est un sel de métal alcalin ou alcalino-terreux, ou un mélange de ceux-ci.

**12.** Composition de revêtement selon la revendication 11, où on obtient ledit sel au moyen d'un procédé dans lequel le sel métallique supplémentaire utilisé ou prévu dans l'étape (C) est un sel de potassium.

**13.** Procédé de réalisation d'un revêtement sans plis, durci à l'air, sur un substrat, comprenant les étapes consistant à appliquer sur le substrat une composition de revêtement à forte teneur en solides selon l'une quelconque des revendications 1 à 12, et laisser la composition durcir à l'air sur le substrat.

**14.** Procédé selon la revendication 13, dans lequel on applique le revêtement à une épaisseur d au moins 0,254 mm (10 mil).